# EUROPEAN PATENT SPECIFICATION

(11) **EP 2 176 189 B1**
(45) Date of publication and mention of the grant of the patent: **30.11.2011**
(21) Application number: 08789161.0
(22) Date of filing: 26.06.2008
(51) Int. Cl.: C04B 28/34, C04B 38/04

(54) **POROUS SUPPORT OF CALCIUM PHOSPHATE CEMENTITIOUS MATERIAL AND ITS USE IN FLUIDIC INSTRUMENTS**
PORÖSER TRÄGER AUS CALCIUMPHOSPHATZEMENT UND SEINE VERWENDUNG FÜR FLUIDISCHE INSTRUMENTE
SUPPORT POREUX DE MATIÈRE À BASE DE CIMENT DE PHOSPHATES DE CALCIUM ET SON UTILISATION DANS DES DISPOSITIFS FLUIDIQUES

(30) Priority: 27.06.2007 IT RM20070363
(43) Date of publication of application: 21.04.2010
(73) Proprietor: Alma Mater Studiorum -Universita' di Bologna, 40126 Bologna (IT)
(72) Inventor: RESCHIGLIAN, Pierluigi, I-40126 Bologna (IT); BIGI, Adriana, I-40126 Bologna (IT); CASOLARI, Sonia, I-40126 Bologna (IT); PANZAVOLTA, Silvia, I-40126 Bologna (IT)
(74) Representative: Spadaro, Marco
(86) International application number: PCT/IB2008/052577
(87) International publication number: WO 2009/001318

(56) References cited:
- WO-A-00/42991
- US-B1- 6 365 050
- US-B2- 7 163 651
- Y. FUJISHIRO, K. TAKAHASHI, T. SATO: "Preparation and compressive strength of alpha-tricalcium phosphate/gelatin gel composite cement" JOURNAL OF BIOMEDICAL MATERIALS RESEARCH PART A, vol. 54, no. 4, 12 December 2000 (2000-12-12), pages 525-530, XP002501446

## Description

The present invention relates to porous supports, in particular for use in fluidic devices used for filtration and/or separation and/or fractionation, in particular in analytical devices, in particular if miniaturized and operating under microfluidic regimes.

More particularly, the present invention relates to a porous support obtainable by a hardening process of a calcium phosphate cement.

### Background of the invention

Manufacturing of fluidic devices for filtration and/or for separation or fractionation requires the use of materials that are able to satisfy more and more demanding working requirements, in particular if the device is to be used for analytical applications and more particularly when it is miniaturized.

At present, different types of materials like low-temperature co-fired ceramics (LTCC) (Youngsman, J., et al., 2006, Electronic Components and Technology Conference; WO2006/17274; US6365050) are used as porous supports for these devices,

These porous supports are commonly named "frit".

In fluidic analytical devices, frits are basic components for flow stream design and regulation. These components must have homogeneous porosity in order to provide the required homogeneous and precise flow rate conditions. They must have high mechanical strength and chemical inertia, and very low shape changeability during use. Furthermore, they have to be compatible with a variety of chemically different fluids having different salinity and acidity, including organic solvents.

In particular, frits used in flow field-flow fractionation (FlFFF) analytical devices must allow the highest homogeneity of the crossflow at different flow rate conditions, and a high-quality surface finishing, even for the common use as porous supports for ultrafiltration membranes. Specifically, if used in microfluidic devices these frits must be modulable in any shape and dimensions, and be easily and perfectly fitted into the device.

The currently available frits have high-cost, which often represent the more expensive components of the whole device. Since they are obtained from materials in solid phase, the currently manufactured frits have poor workability, which limits shape and dimensions of the frits.

Commercially available frits are usually made of sintered ceramic materials, or of suitable polymeric materials. For their use in analytical devices see, for instance, frits made by Upchurch Scientific, USA.

Currently available technology to produce such frits does not allow any shape and dimension of the frit. As a consequence, shape and dimensions must be adjusted to what required only when the manufacturing process comes to completion and before insertion of the frit into the fluidic device. It follows that in the manufacturing process of the frit high accuracy, precision and low tolerance are required to optimize insertion of the frit into the fluidic device. This affects complexity and economy of the cycle production.

Lastly, the sintering technique used for the formation of a ceramic frit is by itself rather complex, and it implies high costs that significantly affect the final sale price of the final product.

It is then advisable the availability of frits that can be produced at low cost, be easily and directly molded with the desired characteristics of porosity, shape and size directly inside the fluidic device (*in situ* setting) and show the performances typical of conventionally-produced porous supports, particularly in the case of microfluidic applications and of miniaturized devices for filtration and/or fractionation.

Porous hydroxyapatite bone cements are currently used in reconstructive surgery of bones and teeth.

Different formulations of these cements are known, see for example US 5,997,624, US 5,976,234, US 5,954,867, US 5,525,148 e US 6,670,293; Almirall, A. et al., Biomaterials 25(2004) 3671-3630; Bigi, A. et al., Chem. Mater., 2004, 16 3760-3745.

Antibacterial ceramics filters made of calcium phosphates are described in EP 0 682 867, while US 4,376,168, JP 2003126239, JP 2003146773 describe ceramics based on sintered calcium phosphates used as biocompatible materials for bone reconstruction. <insert page 2a>

### Summary of the invention

It has now been surprisingly found that calcium phosphates cements, which are not ceramic materials, have all the above-described, ideal characteristics that are necessary to make these cements to be used as frits more conveniently than conventional materials. These cements then result to be useful as porous supports in fluidic devices for filtration, separation, fractionation, and most particularly in the field of microfluidic and miniaturized devices.

It is therefore an object of the present invention a filter/frit hybrid system obtainable by the following steps:
a. preparation of a powder of suitable composition based on calcium phosphates;
b. preparation of a cement paste obtained by mixing said powder with a liquid phase;
c. pouring of said paste into an appropriate mould;
d. compression
e. drying
f. hardening
g. optional extraction from said mould.

After step c) and before step d), it is included an additional step in which a filter or a membrane filter of various shape, type or material, for example of cellulosic, polymeric or ceramic material, is placed onto the cement paste surface to obtain by the next steps an "hybrid" porous support.

Another object of the present invention is the use of said filter/frit hybrid system in a fluidic device for analytical separation, for example in a microfluidic device for asymmetrical FlFFF, as well as said device including the porous support.

Said and other objects of the present invention are hereafter disclosed in detail also by means of examples and figures.

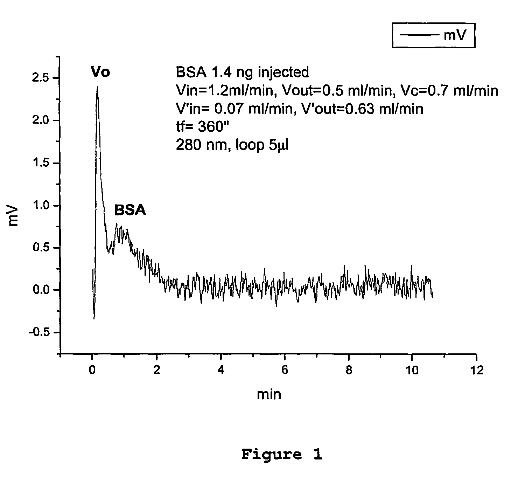

Figure 1 shows an example of fractogram of BSA sample obtained through the prototype channel µAsyFlFFF described in Example 4.

### Detailed description of the invention

According to the present invention, the filter/frit hybrid system is obtained by the above-described process.

It is a cement production process, which also includes a compression step.

Preferably, the hardening step occurs by dipping the cement into a hardening solution.

The preparation process of the porous support involves some conventional steps, like the formation of the cement paste and its pouring into a suited mould to provide the required shape to the porous support.

The cement is made of a mixture of calcium phosphates and, optionally, of a porogen agent.

The porogen agent can be used to modulate the flow stream across the support. The absence of a porogen agent implies a low flow rate, while addition of a porogen agent in different percentages allows modulating the flow rate through the support. Porogen agents are known in the field of cement technology, and particularly in the use of cements for biomedical applications. Methods to control cement porosity of the type used in the present invention are known to the person skilled in the art, see e.g. US 6,670,293, US 7,163,651, US 7,018,460. According to the present invention, preferred porogen additives are sodium chloride, alkali and alkaline earth metals carbonates, hydrogen peroxide, mannitol. Sodium chloride is particularly preferred.

The suitable amount of porogen agent is determined by the person skilled in the art, based on the experience or by means of routine tests.

As aforementioned, cement paste comprises different calcium phosphates and the present invention can be carried out by using different ratio between the components, with α-tricalcium phosphate [α-Ca₃(PO₄)₂; α-TCP] as the main component, and introducing in the formulation different phosphates, such as hydroxyapatite [Ca₁₀(PO₄)₆(OH)₂; HA], β-tricalcium phosphate [β-Ca₃(PO₄)₂; β-TCP], octacalcium phosphate [Ca₈H₂(PO₄)6,5H₂O; OCP], calcium hydrogen phosphate dihydrate [CaHPO₄2H₂O DCPD], and calcium hydrogen phosphate anhydrous [CaHPO₄; DCPA]. Some different calcium salts, such as carbonates, halides and sulphates can be employed. The ratio between the main component and other cement components, which can be either a single phosphate or a phosphate mixture, optionally containing other calcium salts and optionally a porogen agent, ranges from 95:5 to 70:30.

The liquid phase is usually distilled water or an aqueous solution containing other components like NaCl, Na₂HPO₄, soluble salts, H₂O₂, and weak acids. The liquid phase/ powder ratio preferably ranges from 0.15 to 1 ml/g, and more preferably from 0.15 to 0.45 ml/g.

In a first preferred embodiment, said cement paste has the following composition:
a. 95 parts of α-Ca₃(PO₄)₂,
b. 5 parts of CaHPO₄.2H₂O,
c. 10 parts of NaCl,
d. H₂O

The size of the powder particles making cement powder affects its compactness and, as a consequence, its mechanical properties and the cross-flow rate. Particle size suitable to the cement according to the invention ranges from 20 to 120 µm. In particular, particle size less than 80 µm provides a cement of homogeneous porosity and good cohesion.

In an embodiment of the invention, the cement can contain also a hydrophilic polymer and/or a biopolymer. For example, polyacrylates, polycarboxymethylcellulose, polyethyleneglycole, and gelatins are hydrophilic polymers and biopolymers. For the cement according to the present invention, gelatin from pig skin is particularly preferred.

In the filter/frit hybrid system according to the invention, the addition of a hydrophilic polymer and/or biopolymer is preferred to enhance the filter/frit hybrid system performance. The amount of said polymer components can range from 3 to 30% by weight with respect to the main cement component. Particularly, the addition of the polymer and/or biopolymer enhances adhesion property between the frit and the membrane filter, as hereinbelow explained in more detail. This is the case, for example, of ceramic membrane filters made of titanium or zirconium dioxide, in particular if supported onto an alumina layer. In the latter particular case, addition of the polymer or biopolymer component results in better adhesion of the alumina support.

Preparation of said paste is made up following a totally conventional process, which is well known to those skilled in the art.

In a preferred embodiment of the invention, a filter of controlled and predetermined porosity, which is made of materials like modified cellulose or polymers like polysulphones, polyacrylonitrile, polyethylene, and polycarbonate, is poured on the cement surface to build up a filter/frit hybrid system.

The material of the membrane filter to hybridize depends on its compatibility with the fluid (aqueous or organic) to be filterer and with the filtrate. The thickness of said membrane filter is chosen according to the specific application. For example, when said membrane filters are employed in systems for tangential-flow or cross-flow filtration of macromolecules or particulate matter from low molecular-mass species, they are "sheet-like" membranes few micrometers thick, available from specialized manufacturers like, for example, Millipore, Hoechst, Basf, Amersham, and Asahi. Ceramic membranes, for example made of oxides of metals like titanium or zirconium, can be also used. They are however very brittle. In any case, said ceramic membranes cannot bear high back-pressure values without a suitable porous frit used to support them. It thereafter arises the interest for the production of "hybrid" membrane/frit systems using the cements objects of the invention.

After deposition into the mould, the cement paste is pressed by conventional means.

Paste compression is required just to flatten the frit surface. It can be performed for a few minutes, for example from 1 to 10 minutes, using a pressure from 0.1 to 1.0MPa.

In a preferred embodiment of the invention, it is exerted a compression of about 0.7MPa, for example for about 3 minutes.

Once the compression step has come to completion, the drying step is carried out at a temperature ranging from 4°C to 60°C, and usually at room or even higher temperatures. However, it is advisable not to exceed a temperature of 60°C. This is to avoid the occurrence of brittleness issues in the frit. The drying process is usually checked by visual inspection of the final product. At room temperature, drying usually occurs in about 30 minutes. When necessary, drying times can be determined by experimentation. As a practical rule, they approximately range from 1 minute to 24 hours.

Cement hardening constitutes the further step of the process. It represents the time required from the calcium phosphate components that are present in the cement paste to hydrolyze to hydroxyapatite. The hardening reaction occurs following conventional procedures, for example by storing the cement in water saturated atmosphere. Most suitably, soaking of the cement in aqueous solutions accelerates hardening. Said soaking solution can contain different components, such as NaCl, calcium phosphates, a mixture of ions whose composition mimics the composition of body fluids (SBF).

In a particular embodiment of the invention, the hardening step is performed using a proper soaking solution, for example a 0.9% (w/v) NaCl aqueous solution.

Hardening time differs, depending on paste composition, on conditions in which the frit is maintained during this step (fully or partially soaked in the hardening solution) and on frit thickness. Typically, hardening times range from 1 to 7 days, preferably at a temperature ranging between 25°C and 45°C, for example at 37°C.

If required, the filter/frit hybrid system according to the present invention can be extracted from its mould and used as such, or mounted on other supports. Filter/frit hybrid system extraction from its mould presents no particular technical difficulties. A very simple procedure can be applied when the mould is made of a sufficiently pliant material of low chemical affinity to the cement, and/or if the mould can be opened without breaking or deformation risks. If a mould with such characteristics is used, once dried the filter/frit hybrid system can be extracted from the mould by simply upside-down turning the mould, and/or by straining and/or shaking and/or disassembling the mould. If necessary for specific applications, the method according to the present invention allows the extraction of the dried filter/frit hybrid system from the mould using separation agents, of common knowledge in the technical field of the cements, for example as described in US 4,657,810 or US 4,207,830.

Regardless of the particular embodiment, the porous filter/frit hybrid system is preferably stored in wet atmosphere (100% r.h.).

Some preferred embodiments include analytical devices for filtration or separation, particularly for microfluidic applications.

As aforementioned, the porous filter/frit hybrid system according to the invention is used in an analytical separation device.

In a particularly preferred embodiment according to the invention, said device is a FIFFF channel, more particularly with asymmetrical field, (Asymmetrical FlFFF, AsyFlFFF), also on a miniaturized scale and, consequently, working at microfluidic regimes (micro AsyFlFFF; µAsyFlFFF).

The following examples further describe the invention

### Example 1

A cement paste having the following composition is prepared:
a. 0.95 g of α-Ca₃(PO₄)₂ sieved at < 80 µm,
b. 0.05 g of CaHPO₄ 2H₂O
c. 0.1 g of NaCl,
d. 0.5 ml of H₂O.

The paste is poured into a pre-selected mould, and then compressed by applying for 3 minutes a pressure of 0.5MPa

Then, the item is air-dried, and soaked into a NaCl 0,9% solution at 37°C for the time required to complete the hardening process (setting). Said time ranges from 1 to 7 days, depending on the thickness and surface of the item.

### Example 2

A cement paste having the following composition is prepared:
a. 3.80 g of α-Ca₃(PO₄)₂ sieved at < to 80 µm,
b. 0.2 g of CaHPO₄ 2H₂O,
c. 0.4 g of NaCl ranging from 125 to 250 µm,
d. 2 ml of H₂O.

A portion of said cement paste is poured on the bottom of a plastic-made mould. The mould is designed to confer a given shape to the final frit. In this Example, a disc-shaped (h= 5mm, d = 38mm) mould is used. On said molded paste layer, the membrane filter to hybridize is placed. The membrane filter used for this example is disc-shaped (h=2mm, d=27mm), of fixed and controlled porosity (20 µm), and made of polyethylene. The membrane filter is placed on the paste layer as to make the outer surface of the membrane filter aligned with the mould walls. Subsequently, additional cement paste is added to fill all the empty spaces between the membrane filter and the mould walls. The compression step is then performed by applying a pressure of 0.5MPa for 1 minute.

The further steps consist of drying (10 minutes at room temperature) and hardening. The latter is realized by soaking the item for 7 days in a solution of NaCl 0.9% at 37°C.

### Example 3

A cement paste having the following composition is prepared:
a. 0.950 g of powder made of 85 parts of α-Ca₃(PO₄)₂ and 15 parts of gelatin, sieved at < 40 µm,
b. 0.050 g of CaHPO₄ 2H₂O,
c. 0.5 ml of H₂O.

A portion of said cement paste is poured on the bottom of a plastic (Teflon)-made mould. The mould is designed to confer a given shape to the final frit. In this Example, a cylindrical (h=25 mm, D= 13 mm) mould is used. On said molded paste layer, the membrane filter to hybridize is placed. In this Example, the membrane filter is made of titanium or zirconium oxides supported onto alumina (Al₂O₃), it has circular (h = 2 mm d = 13 mm) shape, and the porosity is fixed (200 nm) and controlled. The alumina filter surface is the surface placed in direct contact with the cement paste. The membrane filter is placed on the paste layer as to make the outer surface of the membrane filter aligned with the mould walls. Subsequently, additional cement paste is added to fill all the empty spaces between the membrane filter and the mould walls. Compression step is then performed by application of a pressure of 0.75MPa for 1 minute.

The further steps consist of drying (10 minutes at room temperature) and hardening. The latter is realized by soaking the item for 7 days in a solution of NaCl 0.9% at 37°C.

After hardening, the hybrid item is extracted from the mould, and then stored until use at room temperature under controlled atmosphere (100% r.h.).

### Example 4

A porous support of the type provided by Example 1 is used as frit in a µAsyFFF channel. The channel walls are in polyvinyl chloride (PVC) (65 x 20 x 3 mm). The channel has a nominal volume of 41 µl, which is cut out from a thin (175 µm in thickness) foil made of plastic material. In this Example it is made of polyethylenterephtalate (Mylar). The channel is trapezoidal in shape, with the major sides that converge towards the flow direction. Its section can be described as the sum of three polygons: a first isosceles triangle (b1 = 0.6 cm, h1 = 0.5 cm) having a base that is the major base of a trapezoid (h = 4,3 cm), whose minor base form the base of a second isosceles triangle (b2 = 0.4 cm, h2 = 0.2 cm). A 10KDa ultrafiltration membrane, made of regenerated cellulose is placed over the wall on which the frit has been inserted.

A bovine albumin serum sample (1.4 ng) is injected in the channel. Phosphate saline buffer (PBS) with sodium chloride, pH=7.4, is used as mobile phase. The flow rate conditions of said mobile phase are set as: inlet flow rate (Vin) = 1,2 ml/min; outlet flow rate (Vout) = 0,5 ml/min. The flow rate across the frit (Vc) then result to be of 0.7 ml/min.

The obtained fractogram of the BSA sample (Figure 1) shows the ability of the channel provided by the Example using the frit according to the invention, to assess the required conditions to well achieve a µAsyFlFFF process. In principle, these conditions are possible only if the flow rate scheme inside the channel is perfectly controlled and homogeneously distributed. The experimental proof of the correct functioning of the channel of the Example, which includes the frit according to the invention, is therefore an indirect but very rugged proof of the perfect functioning of the frit according to the invention, with regards to its porous homogeneity, planarity, and workability at high-quality surface finishing, and waterproof features.

## Claims

1. A filter/frit hybrid system obtainable by a method comprising the following steps:
a. preparation of a powder based on calcium phosphates;
b. preparation of a cement paste by mixing said powder with a liquid phase;
c. pouring said cement paste in a suitable mould and placing on the paste surface a filter or a membrane filter of fixed and controlled porosity;
d. compression;
e. drying;
f. hardening;
g. optional extraction from said mould.

2. A filter/frit hybrid system according to claim 1, wherein said filter is made of cellulosic, polymeric or ceramic material.

3. A filter/frit hybrid system according to any one of claims 1-2, wherein said step f) comprises storing said cement paste in water saturated atmosphere or the immersion of the cement into a hardening solution.

4. A filter/frit hybrid system according to any one of claims 1-3, wherein said cement paste contains at least one compound selected from the group consisting of α-tricalcium phosphate, hydroxyapatite, β-tricalcium phosphate, octacalcium phosphate, calcium hydrogen phosphate dihydrate, calcium hydrogen phosphate anhydrous, carbonates, halides, and calcium sulphates.

5. A filter/frit hybrid system according to any one of claims 1-4, wherein said cement paste is made of α-tricalcium phosphate as first component, the second component being one or more compounds selected from the group consisting of hydroxyapatite, β-tricalcium phosphate, octacalcium phosphate, calcium hydrogen phosphate dihydrate, calcium hydrogen phosphate anhydrous, carbonates, halides and calcium sulphates, and wherein the weight ratio between said first and said second component ranges from 95:5 to 70:30.

6. A filter/frit hybrid system according to any one of claims 1-5, wherein said paste has the following composition in weight:
a. 95 parts of α-Ca₃(PO₄)₂,
b. 5 parts of CaHPO₄2H₂O,
c. 10 parts of NaCl,
d. H₂O.

7. A filter/frit hybrid system according to any one of claims 1-6, wherein said cement paste further comprises a hydrophilic polymer and/or biopolymer.

8. A filter/frit hybrid system according to any one of claims 3-7, wherein said hardening solution is a NaCl 0.9% (w/v) aqueous solution.

9. A filter/frit hybrid system according to any one of claims 3-8, wherein said hardening step is performed at a temperature of 37°C.

10. A filtration or separation device including a porous frit according to any one of claims 1-9.

11. The device according to claim 10, which is for microfluidic applications.

12. The device according to claim 10 or 11, which is a flow field-flow fractionation channel.

13. The device according to claim 12, which is miniaturized.

## Patentansprüche

1. Filter/Fritte-Hybridsystem, erhältlich durch ein Verfahren, das die folgenden Schritte umfasst:
a. Herstellen eines Pulvers, basierend auf Calciumphosphaten;
b. Herstellen einer Zementpaste durch Mischen des genannten Pulvers mit einer flüssigen Phase;
c. Gießen der genannten Zementpaste in eine geeignete Form und Platzieren eines Filters oder eines Membranfilters einer festgelegten und kontrollierten Porosität auf die Pastenoberfläche;
d. Komprimieren;
e. Trocknen;
f. Härten;
g. optionales Ausbringen aus der genannten Form.

2. Filter/Fritte-Hybridsystem, gemäß Anspruch 1, worin der genannte Filter aus einem cellulosischen, polymeren oder keramischen Material hergestellt ist.

3. Filter/Fritte-Hybridsystem, gemäß irgendeinem der Ansprüche 1 - 2, worin der genannte Schritt f) das Lagern der genannten Zementpaste in einer mit Wasser gesättigten Atmosphäre oder das Eintauchen des Zements in eine Härtungslösung umfasst.

4. Filter/Fritte-Hybridsystem, gemäß irgendeinem der Ansprüche 1 - 3, worin die genannte Zementpaste wenigstens eine Verbindung enthält, die ausgewählt ist aus der Gruppe, die aus α-Tricalciumphosphat, Hydroxyapatit, β-Tricalciumphosphat, Octacalciumphosphat, Calciumhydrogenphosphatdihydrat, wasserfreiem Calciumhydrogenphosphat, Carbonaten, Halogeniden und Calciumsulfaten besteht.

5. Filter/Fritte-Hybridsystem, gemäß irgendeinem der Ansprüche 1 - 4, worin die genannte Zementpaste hergestellt ist aus einem α-Tricalciumphosphat als erste Komponente, wobei die zweite Komponente eine oder mehrere Verbindungen ist, ausgewählt aus der Gruppe, bestehend aus Hydroxyapatit, β-Tricalciumphosphat, Octacalciumphosphat, Calciumhydrogenphosphatdihydrat, wasserfreiem Calciumhydrogenphosphat, Carbonaten, Halogeniden und Calciumsulfaten, und worin das Gewichtsverhältnis zwischen der genannten ersten und der genannten zweiten Komponente von 95:5 bis 70:30 reicht.

6. Filter/Fritte-Hybridsystem, gemäß irgendeinem der Ansprüche 1 - 5, worin die genannte Paste die folgende Gewichtszusammensetzung hat:
a. 95 Teile α -Ca₃(PO₄)₂,
b. 5 Teile CaHPO₄ 2H₂O,
c. 10 Teile NaCl,
d. H₂O.

7. Filter/Fritte-Hybridsystem, gemäß irgendeinem der Ansprüche 1 - 6, worin die genannte Zementpaste weiterhin ein hydrophiles Polymer und/oder Biopolymer umfasst.

8. Filter/Fritte-Hybridsystem, gemäß irgendeinem der Ansprüche 3 - 7, worin die genannte Härtungslösung eine 0,9 %-ige (Gew./Vol.) wässrige NaCl-Lösung ist.

9. Filter/Fritte-Hybridsystem, gemäß irgendeinem der Ansprüche 3 - 8, worin der genannte Härtungsschritt bei einer Temperatur von 37°C durchgeführt wird.

10. Filtrations- oder Trennvorrichtung, welche eine poröse Fritte gemäß irgendeinem der Ansprüche 1 - 9 einschließt.

11. Vorrichtung gemäß Anspruch 10, welche für mikrofluidische Anwendungen vorgesehen ist.

12. Vorrichtung gemäß Anspruch 10 oder 11, welche ein Fluss-Feld-Fluss-Fraktionierungskanal ist.

13. Vorrichtung gemäß Anspruch 12, welche miniaturisiert ist.

## Revendications

1. Système hybride de filtre/fritte pouvant être obtenu par un procédé comprenant les étapes suivantes :
a. préparation d'une poudre à base de phosphates de calcium ;
b. préparation d'une pâte de ciment par mélange de ladite poudre avec une phase liquide ;
c. versage de ladite pâte de ciment dans un moule convenable, et placement, sur la surface de la pâte, d'un filtre ou d'un filtre à membrane ayant une porosité fixe et contrôlée ;
d. compression ;
e. séchage ;
f. prise ;
g. éventuellement extraction hors dudit moule.

2. Système hybride de filtre/fritte selon la revendication 1, dans lequel ledit filtre est fait d'un matériau cellulosique, polymère ou céramique.

3. Système hybride de filtre/fritte selon l'une quelconque des revendications 1 et 2, dans lequel ladite étape f) comprend le stockage de ladite pâte de ciment dans une atmosphère saturée en eau ou l'immersion du ciment dans une solution de prise.

4. Système hybride de filtre/fritte selon l'une quelconque des revendications 1 à 3, dans lequel ladite pâte de ciment contient au moins un composé choisi dans le groupe constitué par l'α-phosphate tricalcique, l'hydroxyapatite, le β-phosphate tricalcique, le phosphate octacalcique, l'hydrogénophosphate de calcium dihydraté, l'hydrogénophosphate de calcium anhydre, les carbonates, les halogénures, et les sulfates de calcium.

5. Système hybride de filtre/fritte selon l'une quelconque des revendications 1 à 4, dans lequel ladite pâte de ciment est faite d'α-phosphate tricalcique servant de premier composant, le deuxième composant étant un ou plusieurs composés choisis dans le groupe constitué par l'hydroxyapatite, le β-phosphate tricalcique, le phosphate octacalcique, l'hydrogénophosphate de calcium dihydraté, l'hydrogénophosphate de calcium anhydre, les carbonates, les halogénures, et les sulfates de calcium, et dans lequel le rapport en poids entre ledit premier et ledit deuxième composant est situé dans la plage allant de 95/5 à 70/30.

6. Système hybride de filtre/fritte selon l'une quelconque des revendications 1 à 5, dans lequel ladite pâte a la composition suivante en poids :
a. 95 parties d'α-Ca₃(PO₄)₂,
b. 5 parties de CaHPO₄·2H₂O,
c. 10 parties de NaCl,
d. H₂O.

7. Système hybride de filtre/fritte selon l'une quelconque des revendications 1 à 6, dans lequel ladite pâte de ciment comprend en outre un polymère et/ou biopolymère hydrophile.

8. Système hybride de filtre/fritte selon l'une quelconque des revendications 3 à 7, dans lequel ladite solution de prise est une solution aqueuse à 0,9 % (p/v) de NaCl.

9. Système hybride de filtre/fritte selon l'une quelconque des revendications 3 à 8, dans lequel ladite étape de prise est effectuée à une température de 37°C.

10. Dispositif de filtration ou de séparation comprenant une fritte poreuse selon l'une quelconque des revendications 1 à 9.

11. Dispositif selon la revendication 10, qui est destiné à des applications microfluidiques.

12. Dispositif selon la revendication 10 ou 11, qui est un canal de fractionnement à écoulement de champ d'écoulement.

13. Dispositif selon la revendication 12, qui est miniaturisé.
